Europäisches Patentamt

European Patent Office

Office européen des brevets

(11) Publication number: **0 375 904**
**A2**

## (12) EUROPEAN PATENT APPLICATION

(21) Application number: 89121010.6

(22) Date of filing: 13.11.89

(51) Int. Cl.5: **H04N 9/455**

The title of the invention has been amended (Guidelines for Examination in the EPO, A-III, 7.3).

(30) Priority: 25.11.88 JP 297246/88

(43) Date of publication of application:
**04.07.90 Bulletin 90/27**

(84) Designated Contracting States:
**DE FR GB**

(71) Applicant: **Kabushiki Kaisha Toshiba**
**72, Horikawa-cho Saiwai-ku**
**Kawasaki-shi(JP)**

(72) Inventor: **Murayama, Akihiro c/o Intell. Prop.**
**Div.**
**K.K. Toshiba 1-1 Shibaura 1-chome**
**Minato-ku Tokyo 105(JP)**

(74) Representative: **Henkel, Feiler, Hänzel &**
**Partner**
**Möhlstrasse 37**
**D-8000 München 80(DE)**

(54) **Burst gate pulse generating circuit.**

(57) A burst gate pulse generating circuit of this invention includes a sync separation circuit (32) for separating a synchronizing signal from a composite video signal having a preset burst period and an integrating circuit (38) for integrating the separated horizontal synchronizing signal. The horizontal synchronizing signal is integrated by the integrating circuit (38) and converted into a convex triangular wave and the peak level of the triangular wave of the converted integration output is held by means of a peak hold circuit (42). A voltage difference between the peak level of the triangular wave held by the peak hold circuit (42) and a flat level is divided according to a preset ratio by means of a voltage-dividing circuit (44). Then, a pulse which is obtained by comparing the integration output of the integrating circuit (38) with a reference level is masked by the horizontal synchronizing signal so as to generate a burst gate pulse corresponding to the burst period included in the composite video signal.

FIG. 2

## Burst gate pulse generating circuit for generating burst gate pulse with constant pulse width

This invention relates to a a burst gate pulse generating circuit for generating a burst gate pulse used for processing a composite video signal, and more particularly, to a burst gate pulse generating circuit for generating a burst gate pulse with a constant pulse width.

As is well known in the art, in television receivers generally used, a burst gate pulse is derived from a composite video signal constituted by a luminance signal, chrominance signal, burst signal and synchronizing signal. The above signals may be separated from one another or selectively made active based on the burst gate pulse. The burst gate pulse is normally generated in the period of a back porch in which the burst signal is generated and which starts from the trailing edge.

For example, a burst gate pulse generating circuit for deriving a burst gate pulse from the composite video signal, which is disclosed in, for example, in Japanese Patent Application No. 58-126997 is constructed as follows. That is, the composite video signal is supplied to a sync separation circuit which in turn supplies a horizontal synchronizing signal. The horizontal synchronizing signal from the sync separation circuit is integrated by an integration circuit so as to be converted into an integrated output in the form of convex triangular waveform. After this, the integrated output is supplied to a pulse generating circuit which compares the level of the integrated output with a reference level. As a result, a predetermined pulse is derived from the pulse generating circuit. Further, the pulse is forcedly set to 0 level (or masked) by the horizontal synchronizing signal for a preset period of time by means of the pulse generating circuit and is then derived as a pulse having a reduced amplitude from an output terminal. The pulse derived from the output terminal is the burst gate pulse.

The integration circuit of the conventional burst gate pulse generating circuit has an integration capacitor formed in an integrated circuit (IC) and therefore the capacitance of the capacitor may vary. This means that the level of the convex triangular waveform varies. If the level of the convex triangular waveform varies, the position of an intersection between the reference level and the triangular wave will fluctuate and move back or forth on the time base. As a result, the amplitude of the burst gate pulse varies so that the other circuit blocks may be erroneously operated, making the displayed video image colorless and shifting the black level.

Therefore, in the prior art, the amplitude of the triangular wave is set to a high level so as to suppress variation in the pulse width of the burst gate pulse due to the amplitude level variation of the triangular wave.

However, in a case where the burst gate pulse generating circuit in which the amplitude level of the triangular wave can be changed is used in a television receiver which is driven by a battery, for example, a liquid crystal television receiver, the level of the triangular wave cannot be set sufficiently high because of the limitation of the power source voltage. Therefore, the problem caused by variation in the pulse width of the burst gate pulse becomes more serious.

An object of this invention is to provide a burst gate pulse generating circuit capable of generating a burst gate pulse with a constant pulse width even when the integration capacitance has varied.

According to an aspect of the present invention, there is provided a synchronizing signal processing circuit comprising sync separation means for separating a synchronizing signal from a composite video signal having a predetermined burst period; integrating means for integrating a horizontal synchronizing signal separated by the sync separation means, the integrating means converting the horizontal synchronizing signal into a convex triangular wave; and pulse generating means for comparing the integrated output from the integrating means with a predetermined reference level and masking a pulse obtained as the result of comparison by the horizontal synchronizing signal to produce a burst gate pulse corresponding to the burst period; characterized by further comprising voltage-dividing means for dividing a voltage difference between the peak level of the integrated output of the integrating means and a flat level according to a preset ratio and characterized in that the pulse generating means compares the level of the integrated output from the integrating means with the level of the output of the voltage-dividing means and masks a pulse obtained as the result of comparison by the horizontal synchronizing signal to produce the burst gate pulse.

According to another aspect of the present invention, there is provided a burst gate pulse generating circuit for a composite video signal converting circuit comprising luminance signal processing means for processing a luminance signal included in a composite video signal having a predetermined burst period to effect R, G and B conversion from the composite video signal; chrominance signal processing means for separating and demodulating a chrominance signal of the composite video signal and then supplying a color difference signal to the luminance signal processing means; and synchronizing signal processing means for separating a horizontal synchronizing signal from the composite video signal, converting the horizontal synchronizing signal into a convex triangular wave, comparing the triangular wave with a preset reference level and masking a pulse obtained as the result of comparison by the horizontal synchronizing signal to produce a burst gate pulse corresponding to the burst period and supply the same to the luminance signal processing means and chrominance signal processing means; characterized in that the synchronizing signal processing means includes integrating means for converting the horizontal synchronizing signal into the convex triangular wave after the horizontal synchronizing signal is separated from the composite video signal, voltage-dividing means for dividing a voltage difference between the peak level of the integrated output of the integrating means and a flat level according to a preset ratio; and pulse generating means for masking a pulse obtained as the result of comparison between the level of the integrated output of the integrating means with the level of the output of the voltage-dividing means by the horizontal synchronizing signal to produce the burst gate pulse.

The aforementioned aspects and other features of the present invention are explained in the following description, taken in connection with the accompanying drawings wherein:

Fig. 1 is block diagram showing the construction of the main portion of a television receiver in which a burst gate pulse generating circuit according to this invention is used;

Fig. 2 is a block diagram showing the construction of a synchronizing signal processing circuit shown in Fig. 1;

Figs. 3A through 3F are waveform diagrams illustrating the operation of the synchronizing signal processing circuit shown in Fig. 1; and

Fig. 4 is a circuit diagram showing the detail construction of the burst gate pulse generating circuit of Fig. 2.

There will now be described an embodiment of this invention with reference to the accompanying drawings.

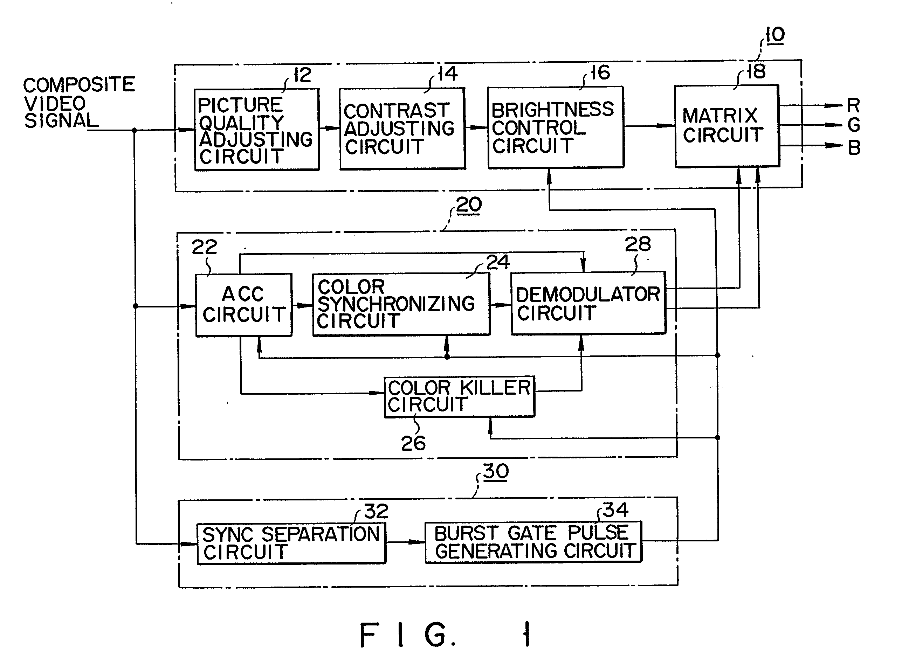

Fig. 1 is block diagram showing the construction of the main portion of a television receiver in which a burst gate pulse generating circuit according to this invention is used. As shown in Fig. 1, a composite video signal received by an antenna (not shown) and amplified is input to a luminance signal processing circuit 10, chrominance signal processing circuit 20 and synchronizing signal processing circuit 30. The luminance signal processing circuit 10 includes a picture quality adjusting circuit 12 for compensating for degradation of high frequency components, a contrast adjusting circuit 14 for adjusting the contrast, a brightness control circuit 16 for adjusting the brightness, and a matrix circuit 18 for effecting conversion of three primary colors R, G and B.

The chrominance signal processing circuit 20 includes an automatic chroma control (ACC) circuit 22 for detecting a burst signal included in the composite video signal and setting the amplitude of the chrominance signal to be carried to a constant level, a color synchronizing circuit 24 for generating a reference subcarrier which is synchronized in phase with the burst signal from the ACC circuit 22, and a color killer circuit 26 for automatically interrupting the operation of the chrominance signal processing circuit 20 when the burst signal becomes less than a predetermined value. Further, the chrominance signal processing circuit 20 includes a demodulator circuit 28 for synchronously demodulating output signals from the ACC circuit 22, color synchronizing circuit 24 and color killer circuit 26 and supplying a color difference signal to the matrix circuit 18.

The synchronizing signal processing circuit 30 includes a sync separation circuit 32 for separating a synchronizing signal from the composite video signal and a burst gate pulse generating circuit 34 for supplying a horizontal synchronizing signal separated by the sync separation circuit 32 to generate a burst gate pulse. An output of the synchronizing signal processing circuit 30 is supplied to the brightness control circuit 16 of the luminance signal processing circuit 10, and the ACC circuit 22, the color synchronizing circuit 24 and the color killer circuit 26 of the chrominance signal processing circuit 20.

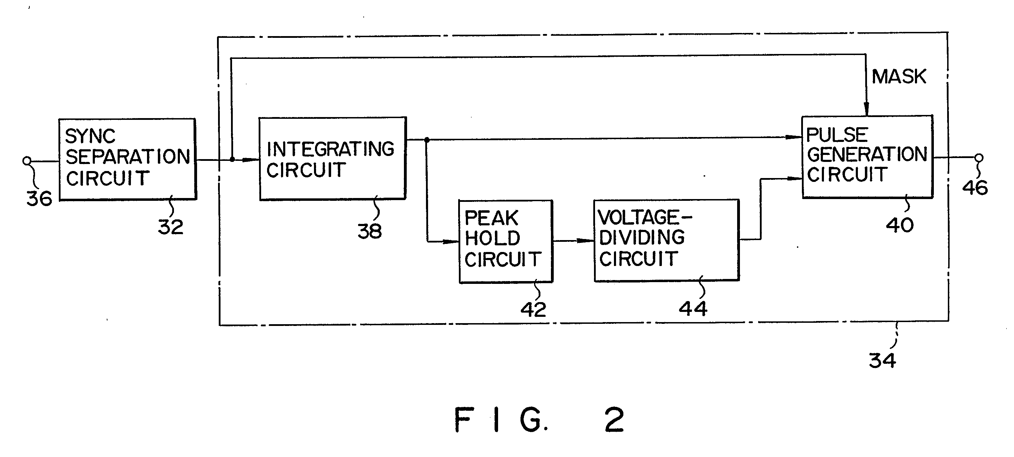

Fig. 2 is a block diagram showing the detail construction of the synchronizing signal processing circuit 30. As shown in Fig. 2, the composite video signal is supplied to the synchronizing signal separating circuit 32 via the input terminal 36 of the synchronizing signal processing circuit 30 and a synchronizing signal is separated from the composite video signal by the synchronizing signal separating circuit 32. The horizontal synchronizing signal separated by the synchronizing signal separating circuit 32 is supplied to and integrated by the integrating circuit 38 of the burst gate pulse generating circuit 34. An output of the integrating circuit 38, that is, an integrated convex triangular wave is supplied to a pulse generating circuit 40 and a peak hold circuit 42. The peak hold circuit 42 holds the peak level of the triangular wave integrated by the integrating circuit 38 and an output thereof is supplied to a voltage-dividing circuit 44. The voltage-dividing circuit 44 divides a voltage difference between the peak level of the triangular wave and a flat level according to a preset ratio. A signal derived by dividing the voltage by means of the voltage-dividing circuit 44 is output to the pulse generating circuit 40. The pulse generating circuit 40 is supplied with a horizontal synchronizing signal in addition to an output of the integrating circuit 38 and an output of the voltage-dividing circuit 44 to mask the generated pulse as will be described later. In this way, the generated pulse is supplied from the output terminal 46 to the brightness control circuit 16, ACC circuit 22, color synchronizing circuit 24 and color killer circuit 26 as a burst gate pulse.

Now, the operation of the synchronizing signal processing circuit having the above construction is explained with reference to the waveform diagrams shown in Figs. 3A to 3F.

First, when a composite video signal shown in Fig. 3A is supplied, a synchronizing signal is separated from the composite video signal by means of the sync separation circuit 32 of the synchronizing signal processing circuit 30 to derive such a horizontal synchronizing signal as shown in Fig. 3B. The horizontal synchronizing signal is supplied to the input terminal 36 of the burst gate pulse generating circuit 34. Then, the horizontal synchronizing signal supplied to the input terminal 36 is integrated by means of the integrating circuit 38 and converted into a convex triangular wave as shown in Fig. 3C.

The converted integration output is supplied to the peak hold circuit 42 which in turn produces a holding output P indicated by a one-dot-dash line in Fig. 3C. A voltage difference between the peak hold level of the triangular wave and the flat level is divided by means of the voltage-dividing circuit 44 according to a preset ratio (for example, 7:3). As a result, a voltage-dividing signal as indicated by a one-dot-dash line in Fig. 3D is output to the pulse generating circuit 40. Like a solid line in Fig. 3C, a solid line in Fig. 3D indicates an integrated output of triangular waveform.

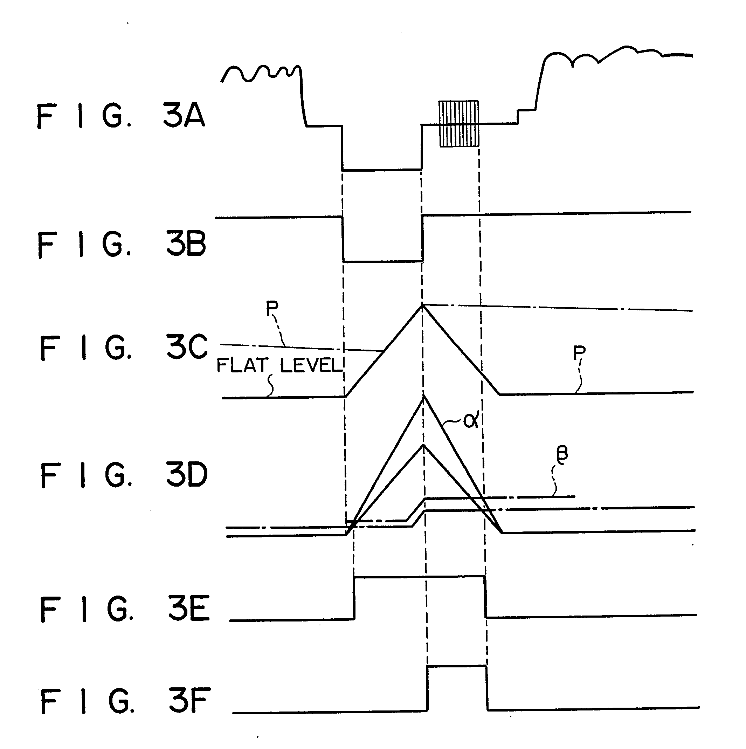

The pulse generating circuit 40 compares the integrated output indicated by the solid line in Fig. 3D with the voltage-dividing signal indicated by the one-dot-dash line to generate a pulse as shown in Fig. 3E. That is, a pulse having leading and trailing edges corresponding to the intersections between the integrated output and the voltage-dividing signal is generated. The pulse generated from the pulse generating circuit 40 is masked by the horizontal synchronizing signal which is directly supplied from the input terminal 36. As the result of the masking operation, a pulse as shown in Fig. 3F is generated. The thus generated pulse is output as a burst gate pulse from the output terminal 46.

Assume now that the amplitude of the triangular wave supplied as an output of the integrating circuit 38 has varied, for example, the amplitude has increased as shown by a symbol $\alpha$ in Fig. 3D. Then, the voltage-dividing signal also rises as shown by a symbol $\beta$ in Fig. 3D according to an increase in the amplitude. Therefore, the pulse width determined by the intersections between the integrated output and the voltage-dividing signal will not vary on the time base and can always be kept constant.

Therefore, even if the amplitude of the convex triangular wave output from the integrating circuit 38 has varied, the voltage difference between the peak level of the triangular wave and the flat level varies according to the same ratio. As a result, the pulse width of a pulse derived by comparing the level of the voltage-dividing output with that of the integrated output can be kept constant. In this way, even if the integration capacitance varies, a burst gate pulse having a constant pulse width can be obtained.

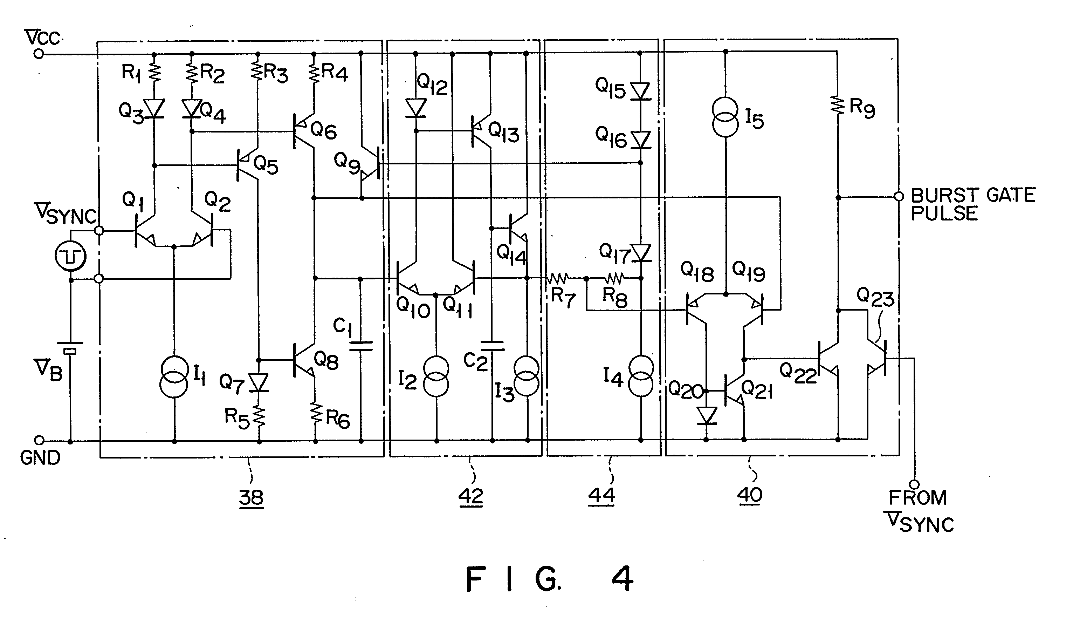

Fig. 4 shows an example of the detail construction of the burst gate pulse generating circuit of Fig. 2 constituted by using concrete circuit elements.

As shown in Fig. 4, the integrating circuit 38 includes a constant current source $I_1$, transistors $Q_1$ to $Q_9$, resistors $R_1$ to $R_6$ and a capacitor $C_1$ and is connected between a ground line GND and a power source line Vcc. The constant current source $I_1$ is switched by a differential amplifier constituted by the transistors $Q_1$ and $Q_2$ according to a DC power source voltage $V_B$ and a horizontal synchronizing signal $V_{SYNC}$. As a result, the capacitor $C_1$ is charged via the transistor Q6. Further, the integration capacitor $C_1$ is discharged via the transistor $Q_8$, thus deriving a convex triangular wave as is shown in Fig. 3C.

The peak hold circuit 42 includes transistors $Q_{10}$ to $Q_{14}$, constant current sources $I_2$ and $I_3$ and a capacitor $C_2$. A triangular wave generated from the integrating circuit 38 is charged on the hold capacitor $C_2$ via a differential amplifier constituted by the transistors $Q_{10}$ and $Q_{11}$ and a current mirror circuit constituted by the transistors $Q_{12}$ and $Q_{13}$. In this way, a voltage corresponding to the peak level held by the capacitor $C_2$ is applied to the emitter of the transistor $Q_{14}$.

The voltage-dividing circuit 44 includes a constant current source $I_4$, transistors $Q_{15}$ to $Q_{17}$ and resistors $R_7$ and $R_8$. A voltage difference between the peak level of the triangular wave and the flat level is divided by the resistors $R_7$ and $R_8$.

Further, the pulse generating circuit 40 includes transistors Q18 to Q23, a constant current source $I_5$ and a resistor R9. A differential amplifier constituted by the transistors $Q_{18}$ and $Q_{19}$ functions to compare the voltage-divided signal with the level of the triangular wave to generate a pulse. The thus generated pulse is masked by a horizontal synchronizing signal supplied via the transistor $Q_{23}$. As a result, a burst gate pulse is generated.

As described above, according to this invention, there is provided an excellent burst gate pulse generating circuit which can produce a burst gate pulse with a constant pulse width even when the integration capacitance varies.

## Claims

1. A synchronizing signal processing circuit comprising sync separation means for separating a synchronizing signal from a composite video signal having a predetermined burst period; integrating means for integrating a horizontal synchronizing signal separated by said sync separation means, said integrating means converting the horizontal synchronizing signal into a convex triangular wave; and pulse generating means for comparing the integrated output from said integrating means with a predetermined reference level and masking a pulse obtained as the result of comparison by the horizontal synchronizing signal to produce a burst gate pulse corresponding to the burst period; characterized by further comprising voltage-dividing means (42, 44) for dividing a voltage difference between the peak level of the integrated output of said integrating means (38) and a flat level according to a preset ratio and characterized in that said pulse generating means (40) compares the level of the integrated output from said integrating means (38) with the level of the output of said voltage-dividing means (42, 44) and masks a pulse obtained as the result of comparison by the horizontal synchronizing signal to produce the burst gate pulse.

2. A circuit according to claim 1, characterized in that said pulse generating means (40) generates a pulse having leading and trailing edges corresponding to points at which the integrated output of said integrating means (38) and the output of said voltage-dividing means (42, 44) are set to the same output level and then masks the pulse by the horizontal synchronizing signal to produce the burst gate pulse.

3. A circuit according to claim 2, characterized in that said voltage-dividing means (42, 44) includes a peak hold circuit (42) for holding the peak level of the triangular wave output from said integrating means (38) and a voltage-dividing circuit (44) for dividing a voltage difference between the peak level of the triangular level held by means of said peak hold circuit (42) and the flat level according to a preset ratio.

4. A circuit according to claim 3, characterized in that the voltage dividing ratio of said voltage-dividing circuit (44) can be variously set.

5. A burst gate pulse generating circuit for a composite video signal converting circuit comprising luminance signal processing means for processing a luminance signal included in a composite video signal having a predetermined burst period to effect R, G and B conversion from the composite video signal; chrominance signal processing means for separating and demodulating a chrominance signal of the composite video signal and then supplying a color difference signal to said luminance signal processing means; and synchronizing signal processing means for separating a horizontal synchronizing signal from the composite video signal, converting the horizontal synchronizing signal into a convex triangular wave, comparing the triangular wave with a preset reference level and masking a pulse obtained as the result of comparison by use of the horizontal synchronizing signal to produce a burst gate pulse corresponding to the burst period and supply the same to said luminance signal processing means and chrominance signal processing means; characterized in that said synchronizing signal processing means (30) includes integrating means (38) for converting the horizontal synchronizing signal into the convex triangular wave after the horizontal synchronizing signal is separated from the composite video signal, voltage-dividing means (42, 44) for dividing a voltage difference between the peak level of the integrated output of said integrating means (38) and a flat level according to a preset ratio; and pulse generating means (40) for masking a pulse obtained as the result of comparison between the level of the integrated output of said integrating means (38) with the level of the output of said voltage-dividing means (42, 44) by the horizontal synchronizing signal to produce the burst gate pulse.

6. A circuit according to claim 5, characterized in that said pulse generating means (40) generates a pulse having leading and trailing edges corresponding to points at which the integrated output of said integrating means (38) and the output of said voltage-dividing means (42, 44) are set to the same output level and then masks the pulse by the horizontal synchronizing signal to produce the burst gate pulse.

7. A circuit according to claim 6, characterized in that said voltage-dividing means (42, 44) includes a peak hold circuit (42) for holding the peak level of the triangular wave output from said integrating means (38) and a voltage-dividing circuit (44) for dividing a voltage difference between the peak level of the triangular level held by means of said peak hold circuit (42) and the flat level according to a preset ratio.

8. A circuit according to claim 7, characterized in that said dividing ratio of said voltage-dividing circuit (44) can be variously set.

COMPOSITE VIDEO SIGNAL

PICTURE QUALITY ADJUSTING CIRCUIT *12*

CONTRAST ADJUSTING CIRCUIT *14*

BRIGHTNESS CONTROL CIRCUIT *16*

MATRIX CIRCUIT *18*

→ R
→ G
→ B

*10*

*20*

ACC CIRCUIT *22*

COLOR SYNCHRONIZING CIRCUIT *24*

DEMODULATOR CIRCUIT *28*

COLOR KILLER CIRCUIT *26*

*30*

SYNC SEPARATION CIRCUIT *32*

BURST GATE PULSE GENERATING CIRCUIT *34*

F I G.  1

EP 0 375 904 A2

F I G.  2

EP 0 375 904 A2

F I G. 3A

F I G. 3B

F I G. 3C

F I G. 3D

F I G. 3E

F I G. 3F

F I G.  4